# EUROPÄISCHE PATENTSCHRIFT

(11) **EP 1 653 132 B1**
(45) Veröffentlichungstag und Bekanntmachung des Hinweises auf die Patenterteilung: **27.02.2008**
(21) Anmeldenummer: 05110023.8
(22) Anmeldetag: 26.10.2005
(51) Int. Cl.: F16K 11/044, F16K 11/048

(54) **Dreiwegeventil**
Three-way valve
Soupape à trois voies

(30) Priorität: 02.11.2004 DE 102004052895
(43) Veröffentlichungstag der Anmeldung: 03.05.2006
(73) Patentinhaber: SIEMENS AKTIENGESELLSCHAFT, 80333 München (DE)
(72) Erfinder: Meinhof, André-Heinrich, 76287, Rheinstetten (DE)

(56) Entgegenhaltungen:
- DE-A1- 1 750 092
- DE-A1- 4 201 442
- US-A- 4 448 211

## Beschreibung

Die Erfindung betrifft ein Dreiwegeventil
- mit einer ersten Ventilkammer, einer zweiten Ventilkammer und einer dritten Ventilkammer,
- mit einer durch einen ersten Ventilkörper verschließbaren Fluidpassage zwischen der ersten Ventilkammer und der zweiten Ventilkammer,
- mit einer durch einen zweiten Ventilkörper verschließbaren Fluidpassage zwischen der zweiten Ventilkammer und der dritten Ventilkammer,
- mit einer die Ventilkörper in Schließstellung drückenden Federanordnung, und
- mit einem aus einer Mittenposition in zwei entgegengesetzte Richtungen bewegbaren Betätigungselement, an dem ein erster Mitnehmer und ein zweiter Mitnehmer derart angeordnet sind, dass bei Bewegung des Betätigungselements aus der Mittenposition in die erste Richtung der erste Ventilkörper mittels des ersten Mitnehmers und bei Bewegung in die entgegengesetzte zweite Richtung der zweite Ventilkörper mittels des zweiten Mitnehmers aus der jeweiligen Schließstellung in eine Öffnungsstellung bewegt werden.

Ein derartiges Dreiwegeventil ist beispielsweise aus der DE 42 01 442 A1 bekannt. Dreiwegeventile können in bekannter Weise auch als Schiebeventile, Drehventile oder aus einzelnen Ventilen, zum Beispiel Klappenventilen bestehend, aufgebaut sein. Das Betätigungselement, zum Beispiel eine Schubstange, kann mit seinen Mitnehmern unmittelbar an den Ventilkörpern oder mittelbar an ihnen, zum Beispiel über Hebel, angreifen.

Dreiwegeventile kommen unter anderem in Vorsteuer- oder Servoventilen zum Einsatz. Ein aus der DE 41 35 822 A1 bekanntes Servoventil enthält in einer ersten Stufe eine aus steuerbaren Piezoventilen aufgebaute pneumatische Brückenschaltung zur Erzeugung einer in Vorzeichen und Größe veränderlichen Druckdifferenz. Mit der veränderlichen Druckdifferenz wird in einer weiteren Stufe des Servoventils ein Steuerkolben und über diesen ein Dreiwegeventil verstellt, welches seinerseits zur Verstellung eines Hydraulikzylinders dient. In der Prozessindustrie kommt das Servoventil oft als Bestandteil eines elektropneumatischen Stellungsreglers zum Einsatz, wobei an die Stelle des Hydraulikzylinders ein ein- oder zweiseitiger Antrieb für ein Prozessventil tritt. Bei Ausfall der elektrischen Energie oder der Druckluft im Servoventil wird oft gefordert, dass der von dem Stellungsregler gesteuerte Antrieb das Prozessventil automatisch in eine sichere Position, in der Regel "Öffnen" oder "Schließen", bringt. Dies geschieht dadurch, dass das Dreiwegeventil in Ruheposition eine Stellung einnimmt, in der der Antrieb des Prozessventils entlüftet wird. Es kann aber, insbesondere bei doppelt wirkenden Antrieben, gewünscht sein, dass der Antrieb bei Ausfall der elektrischen oder pneumatischen Energie die jeweils aktuelle Position hält.

Der Erfindung liegt daher die Aufgabe zugrunde, bei einem Dreiwegeventil eine Umschaltung zwischen zwei unterschiedlichen Ruhepositionen zu ermöglichen.

Gemäß der Erfindung wird die Aufgabe dadurch gelöst,
- dass bei dem Dreiwegeventil der eingangs angegebenen Art das Betätigungselement einen dritten Mitnehmer in einer solchen Anordnung aufweist, dass der erste Mitnehmer zwischen dem zweiten und dritten Mitnehmer liegt,
- dass zwischen dem dritten Mitnehmer und dem ersten Ventilkörper oder dem erstem Mitnehmer, jeweils welcher von beiden näher ist, eine Feder angeordnet ist, und
- dass im Bewegungsbereich des dritten Mitnehmers ein zwischen zwei Stellungen umschaltbares Verstellelement in einer solchen Anordnung vorgesehen ist, dass in der Mittenstellung des Betätigungselements und bei Bewegung des Betätigungselements in die eine und die andere Richtung aus der Mittenstellung heraus sich die Feder in der einen Stellung des Verstellelements an dem dritten Mitnehmer und in der anderen Stellung des Verstellelements an dem Verstellelement abstützt.

Bei Umschaltung des Verstellelements von der einen in die andere Stellung ändert sich die insgesamt auf das Bedienelement wirkende Kraft um den Betrag der Kraft der Feder. Damit kann durch einfaches Umschalten des Verstellelements erreicht werden, dass die insgesamt auf das Bedienelement wirkende Kraft der Federanordnung und der Feder dann gleich Null ist, wenn entweder beide Ventilkörper in Schließstellung sind oder wenn einer der Ventilkörper in Schließstellung und der andere in Öffnungsstellung ist. Das Dreiwegeventil ist somit zwischen zwei unterschiedlichen Ruhepositionen umschaltbar.

Je nach Bauart des erfindungsgemäßen Dreiwegeventils kann die Feder separat zu der die Schließkraft für die Ventilkörper erzeugenden Federanordnung vorgesehen oder Bestandteil der Federanordnung sein. Das Betätigungselement kann mit seinen Mitnehmern unmittelbar oder mittelbar, beispielsweise über Hebel, angreifen.

Das Verstellelement ist vorteilhafterweise an dem Gehäuse des Ventils verstellbar gelagert. Vorzugsweise ist dabei das Verstellelement um die Achse des Betätigungselements drehbar und dabei in Richtung der Achse verstellbar gelagert.

Zur weiteren Erläuterung der Erfindung wird im Folgenden auf die Figuren der Zeichnung Bezug genommen; im Einzelnen zeigen die
- Figuren 1 bis 6: ein erstes und die
- Figuren 7 bis 12: ein zweites Ausführungsbeispiel des erfindungsgemäßen Dreiwegeventils bei unter- schiedlichen Stellungen der Ventilkörper und des Verstellelements.

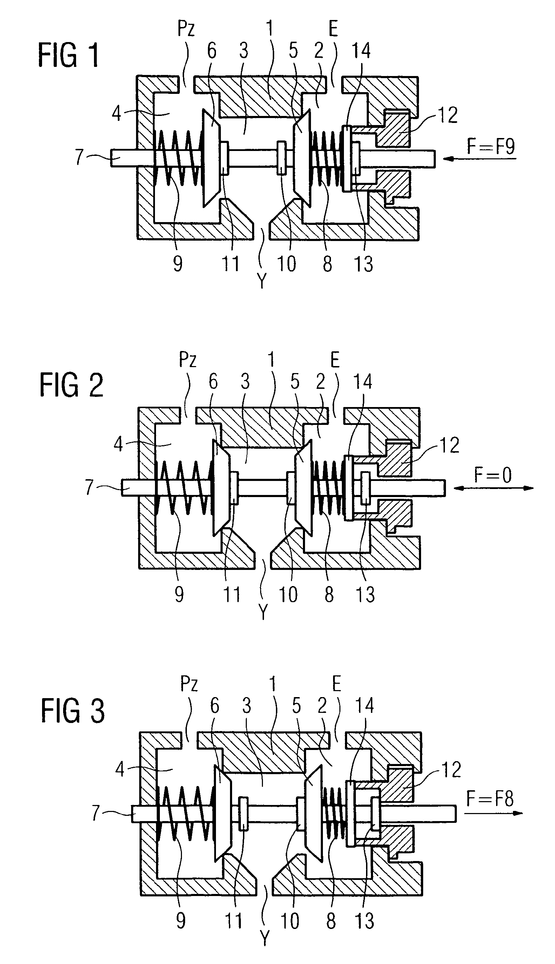

Das in den Figuren 1 bis 6 dargestellte Beispiel eines Dreiwegeventils weist ein Gehäuse 1 mit einer ersten Ventilkammer 2, einer zweiten Ventilkammer 3 und einer dritten Ventilkammer 4 auf, die in Reihe nebeneinander angeordnet und über Fluidpassagen miteinander verbunden sind. Innerhalb der ersten Ventilkammer 2 sind ein erster Ventilkörper 5 und innerhalb der dritten Ventilkammer 4 ein zweiter Ventilkörper 6 angeordnet, die beide auf einem durch das Gehäuse 1 und die Ventilkammern 2, 3, 4 verlaufenden stangenförmigen Betätigungselement 7 axial verschiebbar gelagert sind. Eine erste Feder 8 dient dazu, das erste Ventilelement 5 in eine die Fluidpassage zwischen der ersten Ventilkammer 2 und der zweiten Ventilkammer 3 verschließende Schließstellung zu drücken, während eine zweite Feder 9 dazu dient, das zweite Ventilelement 6 in eine die Fluidpassage zwischen der zweiten Ventilkammer 3 und der dritten Ventilkammer 4 verschließende Schließstellung zu drücken.

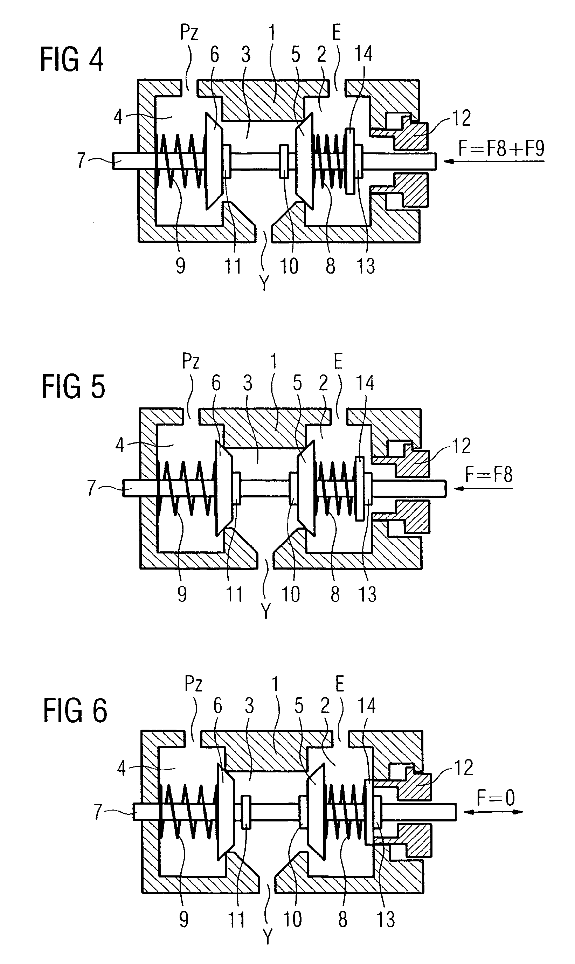

Im Bereich zwischen den beiden Ventilkörpern 5, 6 sind auf dem Betätigungselement 7 ein erster Mitnehmer 10 und ein zweiter Mitnehmer 11 derart befestigt, dass sie in einer in den Figuren 2 und 5 gezeigten Mittenposition des Betätigungselements 7 an keinem der beiden Ventilkörper 5, 6 kraftschlüssig anliegen, so dass beide Ventilkörper 5, 6 durch die Federn 8 bzw. 9 in Schließstellung gedrückt werden.

Wird, wie in den Figuren 3 und 6 gezeigt, das Betätigungselement 7 in eine erste Richtung, hier nach rechts bewegt, so wird der erste Ventilkörper 5 über den ersten Mitnehmer 10 aus der Schließstellung in eine Öffnungsstellung bewegt, während der zweite Ventilkörper 6 in Schließstellung verbleibt.

Wird, wie in den Figuren 1 und 4 gezeigt, dass Betätigungselement 7 in eine zweite, entgegengesetzte Richtung, hier nach links bewegt, so wird der zweite Ventilkörper 6 über den zweiten Mitnehmer 11 aus der Schließstellung in eine Öffnungsstellung bewegt, während der erste Ventilkörper 5 in Schließstellung verbleibt.

Während sich die zweite Feder 9 an der Innenseite des Gehäuses 1 und dem zweiten Ventilkörper 6 abstützt, ist für die erste Feder 8 ein zwischen zwei Stellungen umschaltbares Verstellelement 12 vorgesehen, das es ermöglicht, dass sich die auf der einen Seite an dem ersten Ventilkörper 5 abstützende erste Feder 8 auf der anderen Seite wahlweise an dem Verstellelement 12 oder an einem dritten Mitnehmer 13 des Betätigungselements 7 abstützt. Dazu ist das Verstellelement 12 an dem Gehäuse 1 um die Achse des Betätigungselements 7 und dabei in Richtung der Achse zwischen den beiden Stellungen verstellbar gelagert.

Die Figuren 1 bis 3 zeigen das Verstellelement 12 in seiner ersten Stellung, in der es soweit in die erste Ventilkammer 2 hineinragt, dass sich die erste Feder 8 über eine Ringscheibe 14 an dem Verstellelement 12 abstützt. Der dritte Mitnehmer 13 ist dabei unwirksam. In der in Figur 2 gezeigten Ventilstellung ist die von den Federn 8, 9 auf das Betätigungselement 7 ausgeübte Federkraft F = 0. Wenn der Antrieb für das Betätigungselement 7 ausfallen sollte, wird das Dreiwegeventil daher diese Ruhestellung einnehmen. Um die in Figur 1 gezeigte Ventilstellung zu erreichen, muss der zweite Ventilkörper 6 entgegen der Kraft F9 der zweiten Feder 9 bewegt werden, so dass von dem Betätigungselement 7 die Kraft F = F9 aufgebracht werden muss. Um die in Figur 3 gezeigte Ventilstellung zu erreichen, muss der erste Ventilkörper 5 entgegen der Kraft F8 der ersten Feder 8 bewegt werden, so dass das Betätigungselement 7 die Kraft F = F8 aufbringen muss.

Die Figuren 4 bis 6 zeigen das Verstellelement 12 in seiner zweiten Stellung, in der es gegenüber dem dritten Mitnehmer 13 soweit zurückgezogen ist, dass sich die erste Feder 8 über die Ringscheibe 14 an dem dritten Mitnehmer 13 abstützt. In der in Figur 6 gezeigten Ventilstellung ist die von den Federn 8, 9 auf das Betätigungselement 7 ausgeübte Federkraft F = 0. Wenn der Antrieb für das Betätigungselement 7 ausfallen sollte, wird das Dreiwegeventil daher diese Ruhestellung einnehmen. Die in Figur 5 gezeigte Ventilstellung wird dadurch erreicht, dass der erste Ventilkörper 5 mittels des Betätigungselements 7 und der Kraft F8 der ersten Feder 8 in Schließstellung gebracht wird, so dass dazu von dem Betätigungselement 7 die Kraft F = F8 aufgebracht werden muss. Um die in Figur 4 gezeigte Ventilstellung zu erreichen, muss zusätzlich der zweite Ventilkörper 6 entgegen der Kraft F9 der zweiten Feder 9 bewegt werden, so dass von dem Betätigungselement 7 insgesamt die Kraft F = F8 + F9 aufgebracht werden muss.

Je nach Stellung des Verstellelements 12 ergeben sich also für das Dreiwegeventil zwei unterschiedliche, in den Figuren 2 und 6 dargestellte Ruhepositionen. In dem gezeigten Ausführungsbeispiel wird beispielsweise die dritte Ventilkammer 4 mit Druckluft Pz versorgt, während die erste Ventilkammer 2 zur Abfuhr von Abluft E dient und die zweite, mittlere Ventilkammer 3 Steuerluft Y beispielsweise für den Antrieb eines Prozessventils bereit stellt. Bei den Ventilstellungen nach den Figuren 1 und 4 wird der Antrieb des Prozessventils mit der Druckluft Pz versorgt. Bei den Ventilstellungen nach den Figuren 2 und 5 wird der aktuelle Druck der Steuerluft Y und damit die Position des Prozessventils gehalten. Bei den Ventilstellungen nach den Figuren 3 und 6 wird der Antrieb des Prozessventils entlüftet, so dass das Prozessventil in eine festgelegte Endstellung fährt. Wenn also der Antrieb für das Betätigungselement 7 ausfallen sollte, wird im Falle der in den Figuren 1 bis 3 gezeigten ersten Stellung des Verstellelements 12 die Position des Prozessventils gehalten, während im Falle der in den Figuren 4 bis 6 gezeigten zweiten Stellung des Verstellelements 12 das Prozessventil in eine vorgegebene Endstellung fährt.

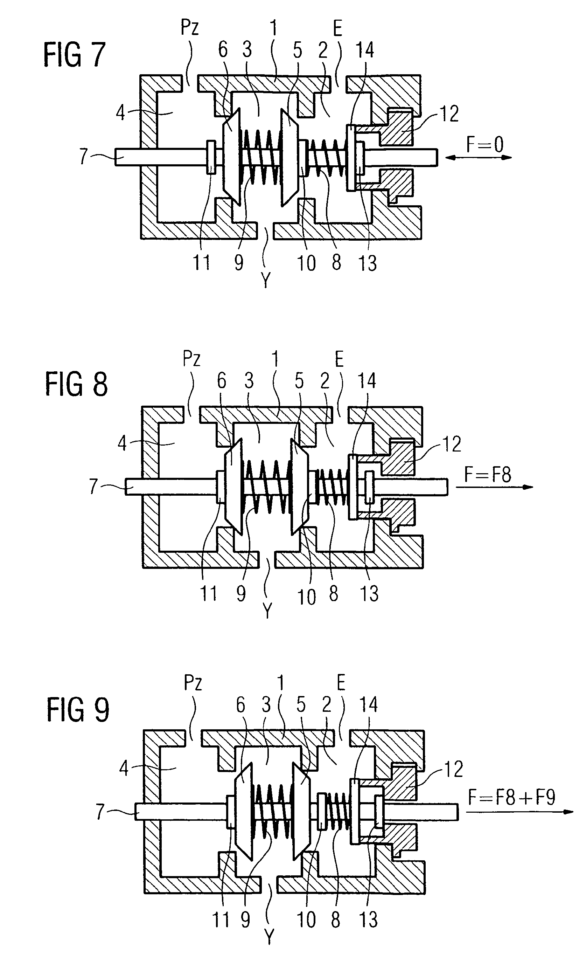

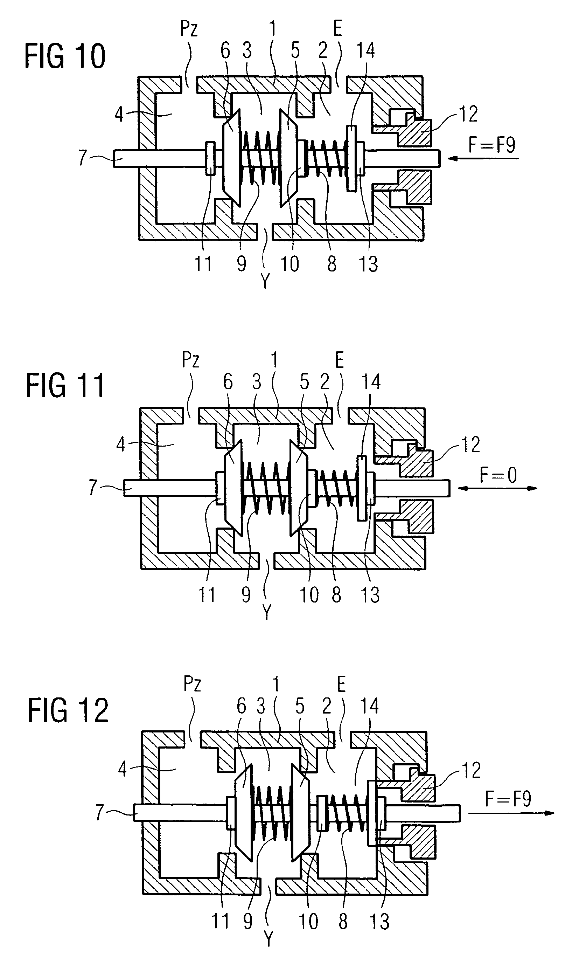

Das in den Figuren 7 bis 12 gezeigte weitere Ausführungsbeispiel des erfindungsgemäßen Dreiwegeventils unterscheidet sich von dem Beispiel nach den Figuren 1 bis 6 dadurch, dass die beiden Ventilkörper 5, 6, innerhalb der zweiten, mittleren Ventilkammer 3 angeordnet sind, weswegen der erste und zweite Mitnehmer 10, 11 derart angeordnet sind, dass sich die beiden Ventilkörper 5, 6 zwischen ihnen befinden. Aus dem gleichen Grund ist auch die zweite Feder 9 zwischen den beiden Ventilkörpern 5, 6 angeordnet und die erste Feder 8 stützt sich nicht an dem ersten Ventilkörper 5, sondern an dem ersten Mitnehmer 10 ab. Die beiden unterschiedlichen Ruhestellungen des Dreiwegeventils, bei denen die auf das Betätigungselement 7 wirkende Kraft F der beiden Federn 8 und 9 F = 0 ist, sind in den Figuren 7 und 11 dargestellt. Zur Erreichung der Ventilstellung in Figur 8 muss das Betätigungselement 7 die Kraft F = F8, für die Ventilstellung in Figur 9 die Kraft F = F8 + F9, für die Ventilstellung in Figur 10 die Kraft F = F9 und für die Ventilstellung in Figur 12 die Kraft F = F9 aufbringen.

Bei den gezeigten Ausführungsbeispielen erstreckt sich das Betätigungselement 7 durch die Ventilkammern 2, 3, 4 und die Ventilkörper 5, 6 hindurch. Es sind natürlich andere Aufbauten des Dreiwegeventils denkbar, bei denen das Betätigungselement 7 beispielsweise außerhalb der Ventilkammer geführt ist und über Hebel auf die beispielsweise als Ventilklappen ausgeführten Ventilkörper einwirkt.

## Patentansprüche

1. Dreiwegeventil
- mit einer ersten Ventilkammer (2), einer zweiten Ventilkammer (3) und einer dritten Ventilkammer (4),
- mit einer durch einen ersten Ventilkörper (5) verschließbaren Fluidpassage zwischen der ersten Ventilkammer (2) und der zweiten Ventilkammer (3),
- mit einer durch einen zweiten Ventilkörper (6) verschließbaren Fluidpassage zwischen der zweiten Ventilkammer (3) und der dritten Ventilkammer (4),
- mit einer die Ventilkörper (5, 6) in Schließstellung drückenden Federanordnung (8, 9) und
- mit einem in aus einer Mittenposition in zwei entgegengesetzte Richtungen bewegbaren Betätigungselement (7), an dem ein erster Mitnehmer (10) und ein zweiter Mitnehmer (11) derart angeordnet sind, dass bei Bewegung des Betätigungselements (7) aus der Mittenposition in die erste Richtung der erste Ventilkörper (5) mittels des ersten Mitnehmers (10) und bei Bewegung in die entgegengesetzte zweite Richtung der zweite Ventilkörper (6) mittels des zweiten Mitnehmers (11) aus der jeweiligen Schließstellung in eine Öffnungsstellung bewegt werden,
**dadurch gekennzeichnet,**
- **dass** das Betätigungselement (7) einen dritten Mitnehmer (13) in einer solchen Anordnung aufweist, dass der erste Mitnehmer (10) zwischen dem zweiten und dritten Mitnehmer (11, 13) liegt,
- **dass** zwischen dem dritten Mitnehmer (13) und dem ersten Ventilkörper (5) oder dem ersten Mitnehmer (10), jeweils welcher von beiden näher ist, eine Feder (8) angeordnet ist und
- **dass** im Bewegungsbereich des dritten Mitnehmers (13) ein zwischen zwei Stellungen umschaltbares Verstellelement (12) in einer solchen Anordnung vorgesehen ist, dass in der Mittenstellung des Betätigungselements (7) und bei Bewegung des Betätigungselements (7) in die eine und die andere Richtung aus der Mittenstellung heraus sich die Feder (8) in der einen Stellung des Verstellelements (12) an dem dritten Mitnehmer (13) und in der anderen Stellung des Verstellelements (12) an dem Verstellelement (12) abstützt.

2. Dreiwegeventil nach Anspruch 1, **dadurch gekennzeichnet, dass** das Verstellelement (12) an einem Gehäuse (1) des Ventils verstellbar gelagert ist.

3. Dreiwegeventil nach Anspruch 2, **dadurch gekennzeichnet, dass** das Verstellelement (12) um die Achse des Betätigungselements (7) drehbar und dabei in Richtung der Achse verstellbar gelagert ist.

## Claims

1. Three-way valve
- - comprising a first valve chamber (2), a second valve chamber (3) and a third valve chamber (4),
- comprising a fluid passage between the first valve chamber (2) and the second valve chamber (3), which passage can be closed by a first valve body (5),
- comprising a fluid passage between the second valve chamber (3) and the third valve chamber (4), which passage can be closed by a second valve body (6),
- comprising a spring arrangement (8, 9) that pushes the valve bodies (5, 6) into a closed position, and
- comprising an actuating element (7) that is moveable from a central position into two opposite directions, on which element (7) a first carrier (10) and a second carrier (11) are arranged in such a way that, when the actuating element (7) is moved from the central position into the first direction, the first valve body (5) is moved by the first carrier (10) and, when the actuating element is moved into the opposite second direction, the second valve body (6) is moved by the second carrier (11), from the respective closed position into an open position,
**characterised in that**
- the actuating element (7) comprises a third carrier (13) arranged in such a way that the first carrier (10) lies between the second and third carrier (11, 13),
- between the third carrier (13) and the first valve body (5), or the first carrier (10), whichever of the two is closer, a spring (8) is arranged, and
- in the zone of movement of the third carrier (13), an adjusting element (12) switchable between two positions is provided, arranged in such a way that in the central position of the actuating element (7) and when the actuating element (7) is moved into one or the other direction out of the central position, the spring (8) is supported in one position of the adjusting element (12) on the third carrier (13), and in the other position of the adjusting element (12) is supported on the adjusting element (12) itself.

2. Three-way valve according to claim 1, **characterised in that** the adjusting element (12) is adjustably mounted on a housing (1) of the valve.

3. Three-way valve according to claim 2, **characterised in that** the adjusting element (12) is adjustably mounted around the axis of the actuating element (7) and thus in the direction of the axis.

## Revendications

1. Soupape à trois voies
- comprenant une première chambre (2) de soupape, une deuxième chambre (3) de soupape et une troisième chambre (4) de soupape,
- comprenant un premier passage de fluide entre la première chambre (2) de soupape et la deuxième chambre (3) de soupape, qui peut être fermé par un premier obturateur (5),
- comprenant un deuxième passage de fluide entre la deuxième chambre (3) de soupape et la troisième chambre (4) de soupape, qui peut être fermé par un deuxième obturateur (6),
- comprenant un dispositif (8, 9) à ressort repoussant l'obturateur (5, 6) pour le mettre en position de fermeture et
- comprenant un élément (7) d'actionnement mobile d'une position médiane dans deux sens opposés et sur lequel sont montés un premier entraîneur (10) et un deuxième entraîneur (11), de façon à ce que, lors du déplacement de l'élément (7) d'actionnement de la position médiane dans le premier sens, le premier obturateur (5) se déplace de la position de fermeture à une position d'ouverture au moyen du premier entraîneur (10) et, lors du déplacement dans le deuxième sens opposé, le deuxième obturateur (6) se déplace au moyen du deuxième entraîneur (11) de la position de fermeture à une position d'ouverture,
**caractérisée**
- **en ce que** l'élément (7) d'actionnement a un troisième entraîneur (13) suivant un agencement tel que le premier entraîneur (10) se trouve entre le deuxième et le troisième entraîneur (11, 13),
- **en ce qu**'il est monté un ressort (8) entre le troisième entraîneur (13) et le premier obturateur (5) ou le premier entraîneur (10), selon celui des deux qui est le plus près et
- **en ce que** dans la zone de déplacement du troisième entraîneur (13) est prévu un élément (12) de déplacement commutable entre deux positions et suivant un agencement tel que, dans la position médiane de l'élément (7) d'actionnement et lors du déplacement de l'élément (7) d'actionnement dans un sens et dans l'autre à partir de la position médiane, le ressort (8) s'appuie dans l'une des positions de l'élément (12) de déplacement sur le troisième entraîneur (13) et, dans l'autre position de l'élément (12) de déplacement, sur l'élément (12) de déplacement.

2. Soupape à trois voies suivant la revendication 1, **caractérisée en ce que** l'élément (12) de déplacement est monté déplaçable sur un corps (1) de la soupape.

3. Soupape à trois voies suivant la revendication 2, **caractérisée en ce que** l'élément (12) de déplacement est déplaçable dans la direction de l'axe.
